# EUROPEAN PATENT SPECIFICATION

(11) **EP 2 043 392 B1**
(45) Date of publication and mention of the grant of the patent: **14.08.2013**
(21) Application number: 07019205.9
(22) Date of filing: 28.09.2007
(51) Int. Cl.: H04W 4/14

(54) **Apparatus, method and identifier request message frame for providing a mobile user identifier**
Vorrichtung, Verfahren und Identifikatoranfrage-Nachrichtenrahmen zur Bereitstellung eines Mobilfunknutzeridentifikators
Appareil, procédé et cadre de message de requête d'identificateur pour fournir un identificateur d'utilisateur mobile

(43) Date of publication of application: 01.04.2009
(73) Proprietor: Nokia Siemens Networks Oy, 02610 Espoo (FI)
(72) Inventor: Wiehe, Ulrich, 36251 Bad Hersfeld (DE)
(74) Representative: Schober, Ralf Stefan

(56) References cited:
- EP-A- 1 622 412
- EP-A- 1 732 277
- US-A1- 2007 213 050
- "Digital cellular telecommunications system (Phase 2+); Universal Mobile Telecommunications System (UMTS); Multimedia Messaging Service (MMS); Functional description; Stage 2 (3GPP TS 23.140 version 6.14.0 Release 6); ETSI TS 123 140" ETSI STANDARDS, EUROPEAN TELECOMMUNICATIONS STANDARDS INSTITUTE, SOPHIA-ANTIPO, FR, vol. 3-T2, no. V6140, September 2006 (2006-09), XP014036285 ISSN: 0000-0001
- "Digital cellular telecommunications system (Phase 2+); Universal Mobile Telecommunications System (UMTS); Mobile Application Part (MAP) specification (3GPP TS 29.002 version 7.8.0 Release 7); ETSI TS 129 002" ETSI STANDARDS, EUROPEAN TELECOMMUNICATIONS STANDARDS INSTITUTE, SOPHIA-ANTIPO, FR, vol. 3-CN2;3-CN4, no. V780, June 2007 (2007-06), pages 164-165,204-205, XP002470685 ISSN: 0000-0001
- "Universal Mobile Telecommunications System (UMTS); Support of Short Message Service (SMS) over generic 3GPP Internet Protocol (IP) access; Stage 2 (3GPP TS 23.204 version 7.3.0 Release 7); ETSI TS 123 204" ETSI STANDARDS, EUROPEAN TELECOMMUNICATIONS STANDARDS INSTITUTE, SOPHIA-ANTIPO, FR, vol. 3-SA2, no. V730, June 2007 (2007-06), XP014037748 ISSN: 0000-0001
- 3GPP: "3rd Generation Partnership Project; Technical Specification Group Core Network and Terminals; Study into routeing of MT-SMs via the HPLMN (Release 7)" 3GPP TR 23.840 V7.1.0 (2007-03), March 2007 (2007-03), pages 1-22, XP002470686

## Description

### Field of invention

The present invention relates to the field of a public land mobile network (PLMN), which is a communication network. In particular the present invention relates to an apparatus for providing a mobile user identifier, a method for providing a mobile user identifier, a computer-readable medium in which a computer program for providing a mobile user identifier is stored, a program element for providing a mobile user identifier, an apparatus for requesting a mobile user identifier, a method for requesting a mobile user identifier, a computer-readable medium, in which a computer program for requesting a mobile user identifier is stored, a program element for requesting a mobile user identifier and an identifier request message frame.

### Art Background

A study into routeing of mobile terminating short messages (MT-SMs) via the home public land mobile network (HPLMN) has shown that a new network entity, which is called a short message service router (SMS-Router), may be useful to be introduced in the HPLMN. MT-SMs then are routed via the SMS-Router. The same mechanism is used by the SMS-Router as it is used for routeing via the Internet protocol (IP), where the Internet protocol-short message-gateway (IP-SM-GW) performs the functionality of the SMS-Router.

The principle of the mechanism is described as follows. When receiving a mobile application part send routing info for short message (MAP SRI-SM) from a short message service gateway mobile switching centre (SMS-GMSC), or from any entity pretending to be an SMS-GMSC, the home location register (HLR) relays this message to the SMS-Router. The SMS-Router then retrieves the actual international mobile subscriber identity (IMSI) and a mobile switching centre (MSC) address and/or serving general packet radio service support node (SGSN) address from the HLR.

The SMS-Router further allocates a temporary Correlation identifier (Correlation ID), which is also called a faked IMSI. The SMS-Router stores the Correlation ID against the retrieved data, returns the correlation ID rather than the IMSI and returns its own address rather than the MSC and/or SGSN address to the SMS-GMSC with an MAP SRI-SM ack (acknowledge) and waits for the short message, which has to be delivered from the SMS-GMSC to the SMS-Router.

If the short message is not delivered within a certain time, the Correlation ID is released and the data stored against it are deleted.

The message MAP SRI-SM may be "misused" for a purpose other than retrieval of the network node address, to which address a short message is then delivered. This other purpose may be retrieval of the subscriber's IMSI or retrieval of the subscriber's mobile country code (MCC) + the mobile network code (MNC) when only the mobile station integrated service digital network (MSISDN) number is known. The mobile application part (MAP) message SEND-IMSI has been standardized to serve the retrieval of the IMSI from the MSISDN. However, it seems that HLR vendors do not support this message.

As a result of the "misuse" the SMS-Routers unnecessarily retrieve IMSI and MSC/SGSN addresses from the HLR in the case where only MCC+MNC are needed by the mis-user and unnecessarily allocate a Correlation ID which is valid until the time out waiting for a short message occurs, which short message in the misuse case was never intended to be sent. A mis-user may be a network node that sends the message MAP SRI-SM although delivery of a short message is not intended.

In the document 3GPP TR 23.840 V7.1.0 a study into a core network architecture for inter-PLMN short message delivery is disclosed.

The document 3GPP TS 23.204 V7.3.0 discloses the support of short message service over generic 3GPP^{™} (Third Generation Partnership Project) Internet protocol access.

The document 3GPP TS 23.140 V6.14.0 discloses a recipient MSISDN address resolution based on IMSI.

There may be a need for a more effective use of network resources within a communication network.

### Summary of the Invention

This need may be met by the subject-matter according to the independent claims. Advantageous embodiments of the present invention are described by the dependent claims.

According to an aspect of the invention an apparatus for providing a mobile user identifier is provided. The apparatus comprises an identifier request message receiving device, an indication detecting device and an identifier retrieving device. The indication detecting device is connected to the identifier request message receiving device and to the identifier retrieving device.

The identifier request message receiving device is adapted for receiving an identifier request message or identifier request message frame for providing a mobile user identifier.

The indication detecting device is adapted for detecting an indication, e.g. a field or flag, within the identifier request message or within the identifier request message frame. The indication indicates, whether the mobile user identifier only is requested.

The identifier retrieving device is adapted for retrieving the mobile user identifier dependent on the detected indication.

Furthermore the indication or the indication parameter within the identifier request message frame may indicate that a Short Message has to be delivered via the apparatus.

According to a further aspect of the invention a method for providing a mobile user identifier is provided. The method comprises receiving an identifier request message for providing a mobile user identifier. The method further comprises detecting an indication within the identifier request message, wherein the indication indicates, whether the mobile user identifier only is requested. The method further comprises retrieving the mobile user identifier dependent on the detected indication.

According to yet another aspect of the present invention a computer-readable medium is provided in which a computer program for providing a mobile user identifier is stored, which program when being executed by a processor is adapted to carry out a method for providing a mobile user identifier.

According to another aspect of the present invention a program element for providing a mobile user identifier is provided, which program element, when being executed by a processor is adapted to carry out the method of providing a mobile user identifier.

According to another aspect of the present invention an apparatus for requesting a mobile user identifier is provided. The apparatus or sender comprises an indication setting device, an identifier request message configuring device and an identifier request message transceiving device or identifier request message sending device.

The identifier request message configuring device is connected to the indication setting device and to the identifier request message transceiving device.

The identifier request message configuring device is adapted for configuring an identifier request message for providing or for gathering a mobile user identifier.

The indication setting device is adapted for setting an indication within the identifier request message. The indication may be an indication field within an identifier request message frame. The indication indicates, whether the mobile user identifier only is requested.

The identifier request message transceiving device is adapted for sending the identifier request message.

The indication setting device may further be adapted to set or to populate the indication within the identifier request message such, that a receiver of the identifier request message is able to detect whether a Short Message has to be transmitted or not.

According to another aspect of the present invention a method for requesting a mobile user identifier is provided. The method comprises configuring an identifier request message for providing a mobile user identifier. The method further comprises setting an indication within the identifier request message, wherein the indication indicates, whether the mobile user identifier only is requested or whether a Short Message will be sent in addition.

Sending the identifier request message is also comprised by the method.

According to yet another aspect of the present invention a computer-readable medium is provided in which a computer program for requesting a mobile user identifier is stored which computer program, when being executed by a processor is adapted to carry out the method for requesting a mobile user identifier.

According to another aspect of the present invention a program element for requesting a mobile user identifier is provided which program element, when being executed by a processor is adapted to carry out the method for requesting a mobile user identifier.

According to yet another aspect of the present invention an identifier request message frame is provided, which identifier request message frame comprises a plurality of fields for retrieving a mobile user identifier from an apparatus for providing a mobile user identifier. The identifier request message frame further comprises an additional field which is an indication field or an indication parameter, indicating whether the mobile user identifier only is requested.

The identifier request message frame may be a burst of electrical or electro-magnetic signals, which signals correspond to a frame format defined by an identifier request message frame description. The description may be a protocol.

A computer-readable medium may be at least one computer-readable medium selected from the group of computer readable mediums consisting of an universal serial bus memory stick (USB memory stick), a digital versatile disc (DVD), a compact disc (CD), a read-only memory (ROM), an electrically erasable programmable read-only memory (EEPROM), a floppy disc and a hard disc.

The indication field within the identifier request message frame may also control the type of information, which has to be provided by an apparatus receiving the identifier request message frame. Thus, dependent on the used indication field a mobile user identifier may be provided by the receiver of the message. The indication field may indicate that no Short Message is intended to be sent.

The mobile user identifier may be provided in an identifier request message frame. For providing the mobile user identifier the plurality of fields for retrieving a mobile user identifier within an identifier request message frame are populated with the mobile user identifier.

It may be seen as a gist or an idea of the present invention to add an optional indication or indication field to a MAP SRI-SM message in order to control a receiver, an SMS-Router or an IP-SM-GW. In particular, the indication is added to the message in order to instruct the identifier retrieving device of a corresponding apparatus, which information the identifier retrieving device may retrieve. The MAP SRI-SM message may be the identifier request message frame.

The indication may indicate that the intention from a sender is only to retrieve the IMSI or only to retrieve the MCC and MNC of a mobile station (MS). The indication may further indicate that no intention exists to retrieve a network node address of a network node, to which network node a short message is going to be delivered, since the retrieved information e.g. IMSI or MCC+MNC may be used for purposes other than delivery of short message.

Nodes, which do not support such an indication may not send the indication. However, such nodes may still be able to be operated.

A "real" SMS-GMSC, which may always intend to send a Short Message, may also not send an indication. In other words, such a "real" SMS-GMSC may not use an indication field in the case that the SMS-GMSC plans to send a short message. The "real" SMS-GMSC may also use an indication in order to disable interpreting or detecting an indication within a receiver. Disabling the detecting of an indication may allow the receiver to allocate resources and to forward a Short Message.

A first type of nodes, which may differentiate from a "real" SMS-GMSC, e.g. an "originator multimedia service relay/server" (originator MMS relay/server) may "misuse" or "abuse" the MAP SRI-SM message to retrieve the MCC and MNC of a MS. Thus, the first type of nodes may populate the indication in order to retrieve MCC and MNC from the receiver.

A node may misuse the MAP SRI-SM message by sending the MAP SRI-SM message comprising an MSISDN to the HLR. The HLR may resolve the MSISDN and return the corresponding IMSI.

MCC and MNC may be the only information which is requested by the first type of node. Sending an indication for retrieving MCC and MNC, may indicate to the receiver of the MAP SRI-SM message that only MCC and MNC is requested. Thus, the receiver, for example an SMS-Router, may disable allocating internal resources, which are usually used for SMS delivery, and may disable retrieval of IMSI and MSC/SGSN address from the HLR.

A second type of nodes, which may also differentiate from a "real" SMS-GMSC, may be interested in receiving the IMSI only of a MS . Thus, the second type of nodes may "abuse" the MAP SRI-SM message to retrieve the complete IMSI. Such nodes may send the indication in a form indicating that only the IMSI is requested. A receiver, e.g. an SMS-Router, may also disable allocating internal resources, which are usually used for SMS delivery.

In other words, nodes which are interested to retrieve the MCC and MNC may indicate by using a first setting of the indication, that they are only interested in retrieving, querying or interrogating the MCC and MNC.

Nodes, which are interested to retrieve the IMSI may indicate by using a second setting of the indication, that only the IMSI may be requested. Thus, a network node, e.g. an SMS-Router or an Internet protocol-short message-gateway (IP-SM-GW) may not have to allocate resources in order to provide a relay of an SMS.

The first setting and the second setting of the indication may differ in the values used for the indication.

An HLR may ignore the indication, which may be optionally added to an existing message, e.g. to an MAP SRI-SM message.

Receivers, SMS-Routers and similar entities like an IP-SM-GW, may check or detect the indication and if only a MCC and MNC are requested do not retrieve the IMSI and MSC/SGSN addresses from the HLR. In other words, the retrieving of the IMSI and MSC/SGSN addresses from the HLR may be disabled. Furthermore, any functionality which may be used for SMS delivery to a MS may be disabled on the SMS-Router.

Thus, no allocation of a Correlation ID may be made within the SMS-Router or IP-SM-GW since no Short Message will follow an identifier request message frame with an corresponding indication.

If the MCC and MNC are already known within the SMS-Router or stored within an internal database of the SMS-Router no retrieval of the MCC and MNC may be made by the SMS-Router. In other words, the SMS-Router may belong to the same network, which a mobile user, mobile terminal (MT) or mobile station (MS) belongs to. Therefore, the SMS-Router may only have to return an IMSI value containing the correct MCC/MNC and a dummy MSIN, and a dummy network node address.
A dummy IMSI may comprise the MCC+MNC and a dummy MSIN (mobile subscriber identity). The length of the dummy IMSI may be 5 digits at minimum. Thus the length of the dummy MSIN may be zero or the dummy MSIN may be omitted.

If only the IMSI is requested from the SMS-Router, the SMS-Router may have to retrieve the IMSI and MSC/SGSN addresses from the HLR. In that case no Correlation ID may be allocated. In other words, no resources are allocated since the indication indicated that no Short Message delivery is subsequently intended.

If a function, which allocates resources after receiving an identifier request message frame may be implemented within the SMS-Router or the IP-SM-GW, this function may be disabled. The disabling may take place on detecting an indication, which shows that only an IMSI or only a MCC/MNC is requested. By disabling functions on the SMS-Router, the SMS-Router may be controlled using an identifier request message frame.

According to another aspect of the present invention the identifier retrieving device is further adapted for providing an acknowledge message containing the retrieved mobile user identifier.

The correct IMSI and either the correct MSC/SGSN network node addresses or the dummy MSC/SGSN network node addresses or the node's own address may be returned inside a MAP SRI-SM ack (acknowledge) message.

Such an acknowledge message may transmit an IMSI and in particular an MCC and/or MNC to a requesting device like a sender. A standard acknowledge message may be adapted such that the acknowledge message can be used for transmitting the relevant information. Instead of adapting a standard acknowledge message the standard acknowledge message may be used to transport the retrieved information. For example, a field like a field used for transmitting an IMSI may be populated with the retrieved information. If the retrieved information needs less space than the IMSI field, the portion of the field which is not used may be filled with dummy information. In other words, a limited adaptation may have to be performed in order to implement the delivery of a retrieved information like an IMSI or a MCC and MNC.

A backward compatibility may easily be reached by using the MAP SRI-SM ack message for transporting the retrieved IMSI and/or MCC/MNC. Existing nodes may relay the message without interpreting the content of the message.

Only a receiving node of the acknowledge message may have to be adapted such that the returned addresses, in particular the IMSI or MCC and MNC are detected as containing a dummy MSC/SGSN network node address. And thus, the IMSI or the MCC and MNC may correctly be reconstructed in the receiving node. The receiving node may be the node or network node, which has requested the IMSI or MCC and MNC.

Network nodes which may not use the indication field for indicating that the IMSI and/or the MNC and MNC are requested may receive a standard IMSI and may still be operated in an existing network. The standard IMSI may be a fully populated IMSI field within the acknowledge message.

According to another aspect of the present invention the apparatus is further adapted for retrieving the mobile user identifier from an internal database if the mobile user identifier only is requested.

Since an SMS-Router may be operated in the same network as the MS, the SMS-Router may know the corresponding MCC and MNC of the MS. Thus, the SMS-Router may retrieve the mobile user identifier from an internal database or an internal memory.

According to another aspect of the present invention the identifier retrieving device is further adapted for retrieving the mobile user identifier by requesting a home location register, if the mobile user identifier only is requested.

If the IMSI is requested from the SMS-Router the SMS-Router may have to ask the HLR for a corresponding IMSI, before sending the requested mobile user identifier i.e. the IMSI to a requesting node.

According to another aspect of the present invention the indication detecting device is further adapted for allocating resources of the apparatus.

For example, the indication detecting device may be adapted to allocate resources within the SMS-Router for storing information like a Correlation ID, an IMSI and an MSC/SGSN address if no indication is detected that no Short Message will follow. Usually a Short Message will follow or succeed if no indication is available or if the indication contains a value defined for sending a Short Message. The allocation may be done by the SMS-Router in order to prepare the delivery for the Short Message.

However, if the indication detecting device detects an indication value defined for only retrieving a mobile user identifier, the indication detecting device may disable the allocation of resources.

A sender may control the apparatus by sending an indication field, which indication field may be detected by the apparatus. E.g. the sender or network node may control whether the SMS-Router has to transmit an SMS. Furthermore, the SMS-Router may act as a filter. The SMS-Router may have access to information e.g. IMSI, MCC, MNC, Correlation ID, MSC address, SGSN address and SMS Router address. Thus, the SMS-Router may decide which information the SMS-Router sends to the sender of a message which message indicates that the sender is requesting for the relevant information.

Since the SMS-Router may be operated by a network operator or service provider, the service provider may control the network. For example, the network operator may bill for the information, which information is provided by the SMS-Router.

According to another aspect of the present invention the apparatus is at least one apparatus selected from the group of apparatus consisting of a short message service router (SMS-Router) and an Internet protocol short message gateway (IP-SM-GW).

According to another aspect of the present invention the mobile user identifier is at least one mobile user identifier selected from the group of mobile user identifiers consisting of a mobile country code (MCC), a mobile network code (MNC) and an international mobile subscriber identifier (IMSI).

According to another aspect of the present invention the identifier retrieving device is further adapted for populating the acknowledge message with a dummy address.

By populating an acknowledge message with a dummy address an existing field of an acknowledge message, e.g. an MAP SRI-SM ack message, may be used in order to transmit a syntactically standard conform MAP SRI-SM ack message with all mandatory fields populated although the information in some of these fields was explicitly not requested.

According to another aspect of the present invention the indication within the identifier request message is an SMS-Router indication field or sms-routerIndication field.

According to another aspect of the present invention the method comprises providing an acknowledge message containing the retrieved mobile user identifier.

According to another aspect of the present invention the method further comprises retrieving the mobile user identifier from an internal database if the mobile user identifier only is requested.

According to yet another aspect of the present invention the method further comprises retrieving the mobile user identifier by requesting a home location register (HLR) if the mobile user identifier only is requested.

According to another aspect of the present invention the method further comprises allocating resources of the apparatus.

Thus, the apparatus may be controlled by a sender of a mobile user identifier request message.

According to yet another aspect of the present invention the method further comprises populating the acknowledge message with a dummy address.

According to another aspect of the present invention the method further comprises detecting a sms-routerIndication field within the identifier request message as the indication.

According to another aspect of the present invention the identifier request message transceiving device of the apparatus for requesting a mobile user identifier is further adapted for receiving an acknowledge message containing the retrieved mobile user identifier.

Thus, the apparatus for requesting a mobile user identifier may interpret a standard address field of an acknowledge message, e.g. of a MAP SRI-SM ack, which field may be populated partially or completely with dummy information. The fields may generally be populated with the value 0 or any other predefined values. Such dummy information may also be a vendor specific value.

According to another aspect of the present invention the apparatus for requesting a mobile user identifier is at least one apparatus selected from the group of apparatus consisting of a short message service gateway mobile switching center (SMS-GMSC), an abusing node, a multimedia service relay server and a mobile number portability server.

In order to obtain the subscription PLMN of a potentially ported MS, an IMSI or MMC+MNC may be requested but no Short Message succeeds.

According to another aspect of the present invention the mobile user identifier is at least one identifier selected from the group of mobile user identifiers consisting of a mobile country code (MCC), mobile network code (MNC) and an international mobile subscriber identifier (IMSI).

According to another aspect of the present invention the indication within the identifier request message is a sms-routerIndication field.

According to another aspect of the present invention the method for requesting a mobile user identifier comprises receiving an acknowledge message containing the retrieved mobile user identifier.

According to another aspect of the present invention the identifier request message frame is a mobile application part send routing info for short message frame (MAP SRI-SM).

According to another aspect of the present invention the identifier request message frame further comprises an indication, wherein the indication field is an SMS-routerIndication field.

It has to be noted that embodiments of the invention have been describe with reference to different subject-matters. In particular, some embodiments have been described with reference to apparatus type claims whereas other embodiments have been described with reference to method type claims.

However, a person skilled in the art will gather from the above and the following description that, unless other notified, in addition to any combination of features belonging to one type of subject-matter also any combination between features relating to different subject-matters, particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 shows an apparatus for providing a mobile user identifier according to an exemplary embodiment of the present invention.
Fig. 2 shows an IMSI for a better understanding of the present invention.
Fig. 3 shows a message flow diagram sending an SMS for a better understanding of the present invention.
Fig. 4 shows a message flow diagram wherein a node abuses an MAP SRI-SM message for a better understanding of the present invention.
Fig. 5 shows a message flow diagram for sending an SMS according to an exemplary embodiment of the present invention. Fig. 6 shows a message flow diagram, wherein a node abuses an SRI-SM message according to an exemplary embodiment of the present invention.
Fig. 7 shows a further message flow diagram wherein a node abuses an MAP SRI-SM message according to an exemplary embodiment of the present invention.
Fig. 8 shows a list of parameters for a MAP SRI-SM service primitive according to an exemplary embodiment of the present invention.
Fig. 9 shows an identifier request message frame according to an exemplary embodiment of the present invention.
Fig. 10 shows an apparatus for requesting a mobile user identifier according to an exemplary embodiment of the present invention.
Fig. 11 shows a method for providing a mobile user identifier according to an exemplary embodiment of the present invention.

### Detailed Description

The illustration in the drawings is schematically. It is noted that in different figures, similar or identical elements are provided with the same reference signs.

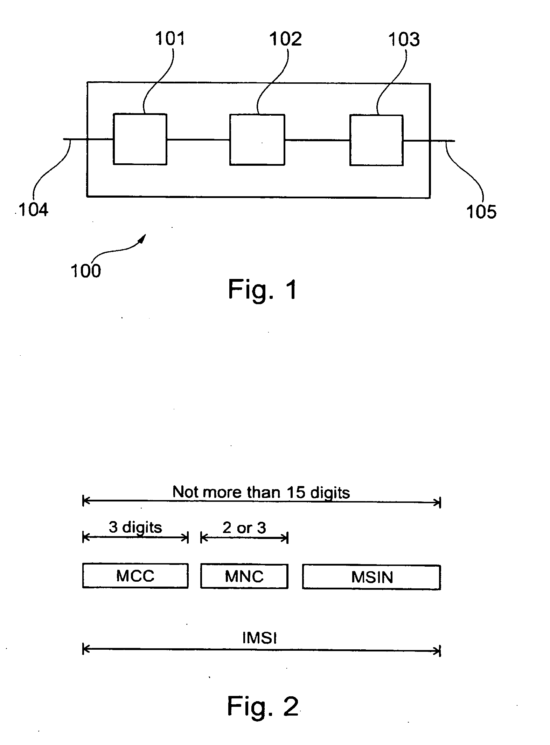

Fig. 1 shows an apparatus for providing a mobile user identifier according to an exemplary embodiment of the present invention.

Fig. 1 shows the apparatus 100 for providing a mobile user identifier, e.g. an SMS-Router 100 or an IP-SM-GW 100. The SMS-Router 100 comprises the identifier request message receiving device 101, which is connected to the indication detecting device 102.

Furthermore, the indication detecting device 102 is connected to the identifier retrieving device 103. The identifier request message receiving device 101 receives an identifier request message, for example a MAP SRI-SM message via the interface 104.

If the indication detecting device 102 detects the absence of an indication indicating that only MCC+MNC are requested, the identifier retrieving device 103 retrieves a mobile user identifier by sending a retrieve message via the interface 105. The retrieve message may also be a MAP SRI-SM message having a destination address of the HLR. Thus, the SMS-Router 100 can retrieve the mobile user identification from the HLR.

If the indication detecting device 102 detects the presence of an indication indicating that only MCC+MNC are requested, the identifier retrieving device 103 is bypassed and no retrieve message is sent via the interface 105.

Fig. 2 shows an IMSI for a better understanding of the present invention.

The IMSI comprises not more than 15 digits. The IMSI comprises the MCC, the MNC and the MSIN of MS. The MCC comprises three digits and the MNC comprises two or three digits.

The MSIN identifies a mobile subscriber within a PLMN. The MSIN may be a dummy MSIN, which forms in combination with the MCC and MNC a dummy IMSI. A dummy MSIN means that the digits which are comprised by the MSIN are populated with values which are either predefined or which are coincidentally populated. The MSIN may be populated by a dummy MSIN in order to use all the available digits of an IMSI. Thus, no adaptation has to be provided for network equipments in order to cope with an IMSI and in particular with a dummy IMSI. Therefore, backward compatibility may be offered.

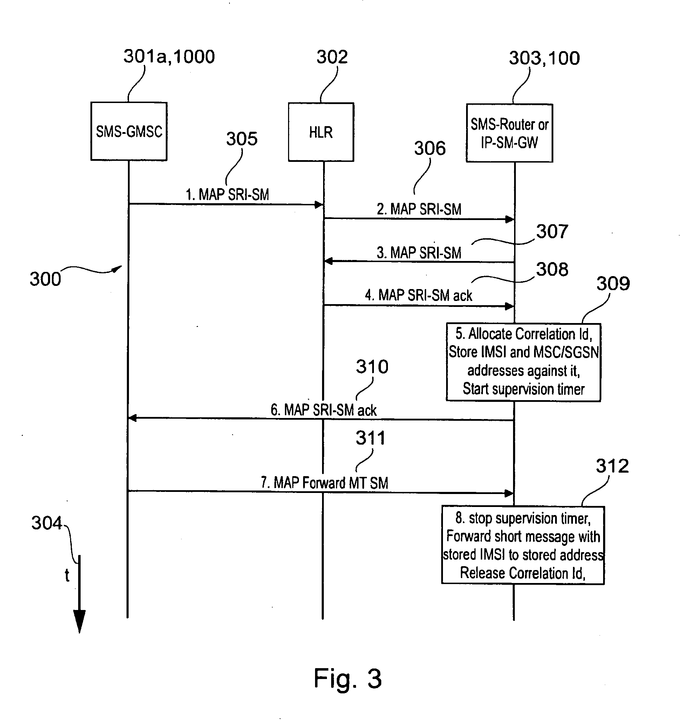

Fig. 3 shows a message flow diagram sending an SMS for a better understanding of the present invention.

In Fig. 3 a message flow diagram 300 is shown. The message flow diagram 300 shows the message exchange between three instances 301a, 302, 303, three network nodes 301a, 302, 303 or three network elements 301a, 302, 303. The three network elements 301a, 302, 303 are depicted next to each other, which means that the three network elements 301a, 302, 303 are connected with each other e.g. in a communication network.

In Fig. 3 the time line 304 shows the direction of increasing time. Thus, within diagram 300 the timely order of messages exchange between the three nodes 301a, 302 and 303 is shown.

The three nodes shown in Fig. 3 are the SMS-GMSC 301a, the HLR 302 and the SMS-Router 303 or IP-SM-GW 303.

In Fig. 3 the real SMS-GMSC 301a is shown, which is a "real" SMS-GMSC. "Real" SMS-GMSC in this content means that the SMS-GMSC is a node, which has the intention to send a Short Message to an MS. The MS is not shown in Fig. 3.

In a first step the "real" SMS-GMSC sends an MAP-SRI SM message 305 to the HLR 302. The MAP SRI-SM is based on the known MSISDN of the MS, which MS is intended to receive the Short Message.

The HLR 302 relays the MAP SRI-SM 305 as a MAP SRI-SM 306 message to the SMS-Router 303. The SMS-Router 303 receives the MAP SRI-SM 306 and composes a new MAP SRI-SM message 307, which is directed to or sent to the HLR 302. By sending the MAP SRI-SM 307 to the HLR 302 the SMS-Router 303 retrieves the IMSI and MSC/SGSN addresses for the destination MS from the HLR 302.

The HLR 302 recognizes the MSISDN of the destination MS and prepares the MAP SRI-SM acknowledge message 308 such, that the MAP SRI-SM ack 308 comprises the IMSI and MSC/SGSN address of the MS. The SMS-Router 303 allocates after receiving the MAP SRI-SM ack 308 in step 309 a Correlation ID. The SMS-Router furthermore stores the retrieved data from the HLR 302 against the Correlation ID. The SMS-Router stores the IMSI and MSC/SGSN address of the destination MS against a Correlation ID.

Furthermore, the SMS-Router 303 starts a supervision timer in order to monitor the lifetime of the allocated Correlation ID. By allocating Correlation ID and storing IMSI and MSC/SGSN address against the Correlation ID the SMS-Router 303 allocates resources. At time out of the supervision timer the resources e.g. the Correlation ID are released and the data stored against it would be deleted.

Embedded in a further MAP SRI-SM ack message 310 the SMS-Router 303 returns the Correlation ID instead of the IMSI and the SMS-Router 303 returns the SMS-Router address instead of MSC/SGSN address to the SMS-GMSC. For addressing the SMS-GMSC, the SMS-Router uses the address of the SMS-GMSC 301a as destination address as received in message 306. The Correlation ID may also comprise the MCC and the MNC.

In other words, the SMS-Router 303 populates the IMSI parameter of the MAP SRI-SM ack message 310 with the Correlation ID value, populates the MSC/SGSN address parameter of the MAP SRI-SM ack message with the address of the SMS-Router 303 and sends the MAP SRI-SM ack message 310 to the SMS-GMSC 301a.

Using the Correlation ID and the SMS-Router address the SMS-GMSC 301a will be able to send a Short Message to the SMS-Router. The SMS-GMSC 301a receives the Correlation ID and SMS-Router address only but does not receive the IMSI and MSC/SGSN address of the destination MS. Thus, no Short Message can be sent to the MS without involving the SMS-Router 303. Therefore fraud may be prevented. Fraud may be if a network node tries to send SPAM SMS messages to various MSs.

The SMS-GMSC 301a delivers the short message (SMS) to the SMS-Router 303 embedded in a MAP Forward MT-SM message 311 (mobile application part forward mobile terminal short message). The IMSI parameter of the MAP Forward MT SM is populated with the Correlation ID which the SMS-GMSC has received from the SMS-Router and the MAP forward MT-SM 311 is sent to the address of the SMS-Router 312.

After receiving the MAP forward MT-SM message 311 the SMS-Router 303 stops as shown in step 312 the supervisor timer. Furthermore, the SMS-Router 303 forwards the short message, which is also embedded in the MAP Forward MT-SM 311 with the stored IMSI to the stored MSC/SGSN address. After forwarding the short message to the MSC/SGSN the SMS-Router 303 releases the resources and in particular releases the Correlation ID.

In other words, the SMS-Router 303 fetches the IMSI and addresses which are stored against a Correlation ID and delivers the short message to the MS.

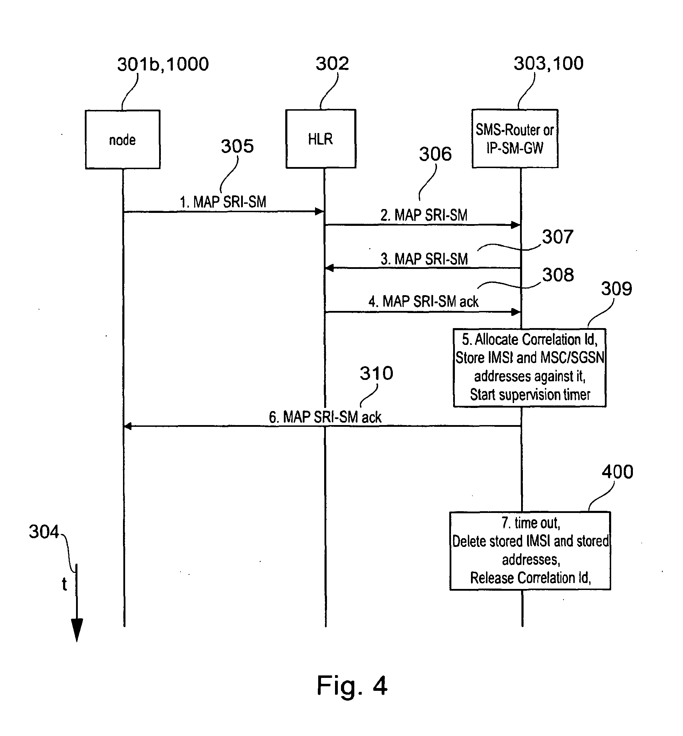

Fig. 4 shows a message flow diagram wherein a node abuses an MAP SRI-SM message for a better understanding of the present invention.

Fig. 4 shows a scenario, which is similar to the scenario shown in Fig. 3. However, in Fig. 4 the node 301b is used instead of SMS-GMSC 301a. The node 301b does not have the intention to send a Short Message. Node 301b for any reason is interested however, to retrieve information about the destination MS. The node 301b may be interested in the complete IMSI or the MCC/MNC.

In order to receive the information which the node 301b desires, the node 301b "misuses" the MAP SRI-SM message.

The node 301b sends the MAP SRI-SM 305 to the HLR 302 based on the known MSISDN of the MS. The HLR 302 relays the MAP SRI-SM 305 as a MAP SRI-SM 306 message to the SMS-Router 303.

The SMS-Router 303 retrieves the IMSI and the MSC/SGSN address for the MS from the HLR 302 as described in Fig. 3 and the SMS-Router 303 allocates a Correlation ID in step 309.

The SMS-Router 303 furthermore stores the received IMSI and MSC/SGSN address against the Correlation ID 309 and starts a supervisor timer. At time out of the supervisor timer the Correlation ID would be released and the data stored against it would be deleted. Deleting the data stored against the Correlation ID means that allocated resources, in particular memory, within the SMS-Router 303 are released again.

The SMS-Router 303 populates the IMSI parameter of an MAP SRI-SM ack 310 message with the Correlation ID value and populates the MSC/SGSN address parameter in the MAP SRI-SM ack message 310 with the address of the SMS-Router 303.

The SMS-router 303 sends this composed MAP SRI-SM ack message 310 to the node 301b. The node 301b may abuse or misuse the MAP SRI-SM message in order to receive the information which the node 301b is interested in. The Correlation ID may comprise the MCC and the MNC, which the node 301b may use, e.g. for determining a ported number.

The node makes use of the received information, i.e. the Correlation ID and the MSC/SGSN address parameter, for the purposes the node 301b needs the information for.

However, in contrary to Fig. 3, node 301b does not deliver a short message to the SMS-Router 303. The node 301b never had the intention to send a Short Message.

Since no SMS is sent, in step 400 the supervisor timer times out. The timer is waiting for a MAP forward MT-SM message which will not come. Therefore, the SMS-Router 303 deletes stored data and releases the Correlation ID. In other words, the SMS-Router 303 releases allocated resources.

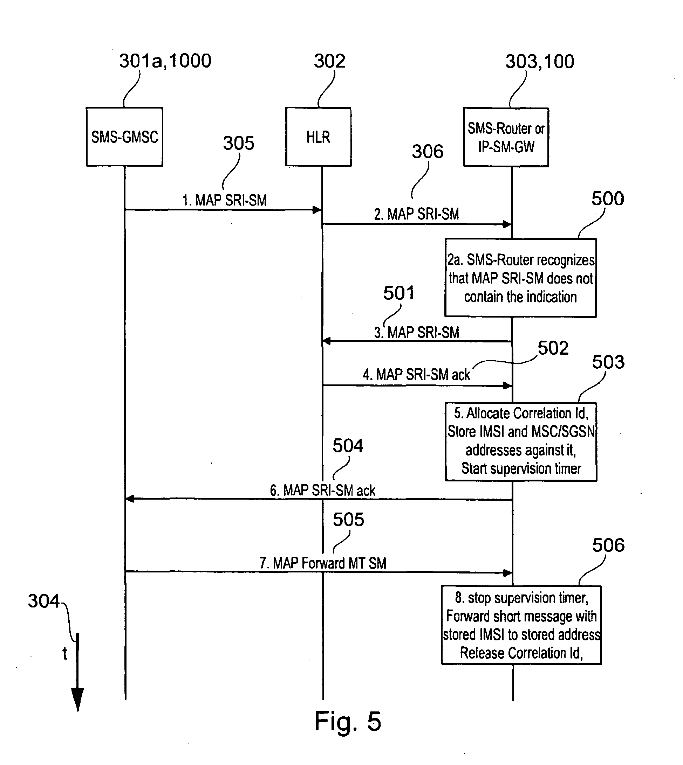

Fig. 5 shows a message flow diagram for sending a Short Message according to an exemplary embodiment of the present invention.

Fig. 5 shows the SMS-GMSC 301a which intends to send a short message to a destination MS. Fig. 5 also shows the SMS-Router 303, which comprises an indication detecting device, which is adapted to detect whether the SMS-GMSC 301a sends a MAP SRI-SM comprising an indication which indicates that a SMS will not succeed. The SMS-GMSC 301a is a "real" SMS-GMSC 301a, however does not use the indication. Therefore, the SMS-GMSC 301a sends the MAP SRI-SM 305 to the HLR 302 without an indication. The HLR 302 relays the MAP SRI-SM message 305 to the MAP SRI-SM message 306 in the direction to the SMS-Router 303.

On receiving the MAP SRI-SM message 306 the SMS-Router 303 recognizes that the MAP SRI-SM message 306 does not contain an indication 500. The indication would show that the sender 301a may only be interested in receiving an IMSI or MCC/MNC. Thus, the SMS-Router 303 detects by checking the indication or the indication field in the MAP SRI-SM message 306, that an SMS-GMSC 301a wants really to send an SMS to a destination.

The SMS-Router 303 replies to the MAP SRI-SM message 306 with a MAP SRI-SM message 501, which is sent to the HLR 302. The HLR 302 replies to the MAP SRI-SM message 501 with an MAP SRI-SM ack message 502 which contains the IMSI and/or MSC/SGSN addresses of the MS.

After receiving the MAP SRI-SM ack 502 message, in step 503 the SMS-Router 303 allocates Correlation ID and stores the retrieved data, i.e. the IMSI and MSC/SGSN address, against the Correlation ID and starts a supervisor timer. At the time out of the supervisor timer the Correlation ID would be released and the data stored against the Correlation ID would be deleted.

After the retrieving of the IMSI and MSC/SGSN address the SMS-Router 303 sends the MAP SRI-SM ack message 504 containing the Correlation ID value and the SMS-Router address value to the SMS-GMSC 301a.

In other words, the SMS-Router 303 populates the IMSI parameter or the IMSI field of the MAP SRI-SM ack message with the allocated Correlation ID value, populates the MSC/SGSN address parameter of the MAP SRI-SM ack message with the address of the SMS-Router and sends the MAP SRI-SM ack message 504 to the SMS-GMSC 301a. The Correlation ID used within the SMS-Router 303 in order to identify the corresponding SMS delivery, and the address of the SMS-Router 303 are enough information to send the Short Message to the destination MS via the SMS-Router 303.

The SMS-GMSC 301a delivers the short message to the SMS-Router 303 with the MAP Forward MT-SM message 505. The IMSI parameter of the MAP forward MT-SM message 505 is populated with the Correlation ID. Thus, the SMS-GMSC 301a may indicate that the actual packet or information which is sent to the SMS-Router 303 belongs to the pre-allocated SMS delivery connection with the corresponding Correlation ID.

In step 506 the SMS-Router 303 fetches the IMSI and addresses which are stored against the Correlation ID and delivers the short message to the destination MS. The SMS-Router 303 stops the supervisor timer, and forwards the short message with the stored IMSI to the stored address and releases the Correlation ID.

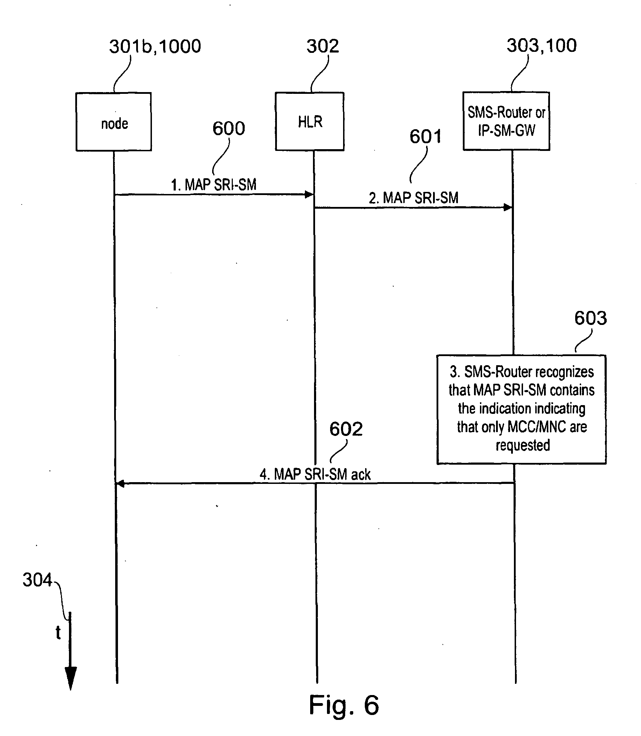

Fig. 6 shows a message flow diagram, wherein a node abuses an SRI-SM message according to an exemplary embodiment of the present invention.

Fig. 6 shows a situation where a node 301b wants to abuse the MAP SRI-SM message in order to request the MCC/MNC information.

In order to allow a node 301b to abuse the MAP SRI-SM message the mechanism using an indication or an indication field of the MAP SRI-SM message is provided.

In Fig. 6 the node 301b wants to determine the MCC/MNC of a destination MS without sending a short message. For example, the node 301b is a network element which wants to determine whether or not a given MSISDN is ported by means of mobile number portability.

In order to retrieve the MCC/MNC the node 301b sets the indication field of a MAP SRI-SM 600 to a value indicating that only MCC/MNC are requested. E.g. a value of 1 may be used to indicate that only MCC and MNC are requested.

The node 301b sends the MAP SRI-SM message 600 to the HLR 302 based on the known MSISDN of the destination MS. The node 301b populates or includes the field or parameter indicating that only MCC/MNC are requested within the MAP SRI-SM message 600. In that way, the node 301b signals, that the node 301b has no intention to deliver a short message but wants to receive the MCC and MNC.

The HLR 302, which receives the MAP SRI-SM message 600 relays the message to the SMS-Router 303 as the MAP SRI-SM message 601.

The SMS-Router 303 recognizes in step 603 that only MCC/MNC information is requested and retrieves the MCC/MNC information from an internal database of the router 303. Since the SMS-Router 303 is in the same network than the destination MS, the SMS-Router may already have stored the MCC/MNC in the internal database.

The SMS-Router 303 then populates the IMSI parameter of an MAP SRI-SM ack message 602 with the MCC/MNC and a dummy MSIN. The dummy MSIN is used in order to provide an IMSI which is fully populated in the MAP SRI-SM ack message 602. The dummy MSIN may have a length of 0.

The SMS-Router 303 furthermore populates the MSC/SGSN address parameter of the MAP SRI-SM ack message 602 with a dummy address. The SMS-Router 303 can use a dummy address because the node 301b does not intend to send a short message to the destination MS.

Such a populated or such a composed MAP SRI-SM ack message 602 is sent to the node 301b by the SMS-Router 303, in particular by the identifier request message receiving device 101. The node 301b makes use of this information, for example MCC/MNC, but does not deliver a short message to the SMS-Router 303. Sending a SMS was never the intention of the node 301b. No resources have been allocated within the SMS-Router 303.

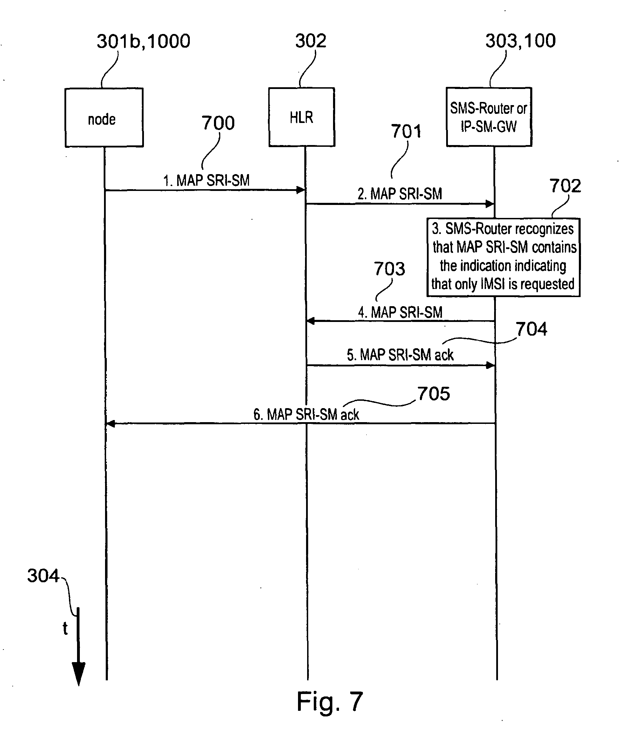

Fig. 7 shows a further message flow diagram wherein a node abuses an MAP SRI-SM message according to an exemplary embodiment of the present invention.

Fig. 7 shows the scenario of Fig. 6 wherein the node 301b wants to receive a complete IMSI. Therefore, the node 301b sets an indication parameter within the MAP SRI-SM message 700 in order to indicate that only the IMSI is requested. For example a value of such a parameter is 0. The node 301b sends the MAP SRI-SM message 700 to the HLR 302 based on the known MSISDN. The node 301b uses the indication field of an MAP SRI-SM message indicating that only the IMSI is requested and that the node 301b does not have the intention to deliver a short message.

The HLR 302 relays the message MAP SRI-SM 700 as the message MAP SRI-SM 701 to the SMS-Router 303.

The SMS-Router 303 recognizes or detects the indication within the MAP SRI-SM message 701. Thus, the SMS-Router 303 recognizes in step 702 that only the IMSI is requested. The SMS-Router 303 has to retrieve the IMSI and the MSC/SGSN address from the HLR, since this information is not available within the SMS-Router 303. Therefore, the router 303 composes an MAP SRI-SM message 703 and sends the message 703 to the HLR 302. The MAP SRI-SM message 703 comprises the MSISDN of the destination device and the HLR prepares an MAP SRI-SM ack message 704 containing the IMSI. The HLR 302 provides the MAP SRI-SM ack 704 message to the SMS-Router 303.

The SMS-Router 303 populates the IMSI parameter, of the MAP SRI-SM ack message 705 with the retrieved IMSI, received from the HLR 302. The SMS-Router 303 furthermore populates the MSC/SGSN address parameter of the MAP SRI-MS ack message 705 with a dummy address and sends the MAP SRI-SM ack message 705 to the node 301b. The node 301b makes use of the information for the purposes the node 301b intended to use the information. However, the node 301b does not deliver a short message to the SMS-Router 303.

In other words, an indication, indication field or indication parameter may be used for a communication from a sender, e.g. an SMS-GMSC 301a or a node 301b, to a receiver, e.g. an SMS-Router 303. The indication can be used even if the indication is not available to show the SMS-Router 303 that a Short Message has to be sent to a destination MS. Furthermore, the indication can be used to indicate that either only the MCC/MNC information or only the IMSI information is required by the node 301b.

Therefore, it may be an idea of the invention to use the MAP SRI-SM message to retrieve the IMSI or MCC and MNC when delivery of a short message is actually not intended. Resources in the SMS-Router 303 can be saved resulting in less load which is produced within the SMS-Router 303.

The MAP SRI-SM message can be used to retrieve IMSI or MCC+MNC when delivery of a short message is actually not intended. Resources in the SMS-Router 303 can be saved resulting in producing less load.

The MAP SRI-SM message may be used in 3GPP^{™} networks by non-SMS-GMSC nodes 301b in order to retrieve the IMSI or just MCC and MNC from the HLR 302 without the intention to deliver short message. In networks, which deploy an SMS-Router 303 or IP-SM-GW 303 this misuse of MAP SRI-SM may result in waste of resources in the SMS-Router or in the IP-SM-GW. The SMS-Router 303 for example may unnecessarily allocate a Correlation ID. Furthermore, the SMS-Router 303 possibly retrieves the IMSI from the HLR and stores the retrieved IMSI against the allocated Correlation ID until the Correlation ID's lifetime expires. Therefore, adding a functionality of detecting an indication to a SMS-Router 303 may avoid the SMS-Router to waste resources.

An interrogation of the HLR 302 may be omitted if a parameter within the "send routing info for short MSG", MAP SRI-SM 700, 701, 600, 601 explicitly indicate that delivery of a short message is not intended and only MCC and MNC are requested.

Furthermore, creating an MT Correlation ID may be omitted if a parameter within the "sendRoutingInfoForShortMsg" MAP SRI-SM, 700, 701, 600, 601 explicitly indicates that delivery of a short message is not intended.

Storing data such as IMSI or MSC address and/or the SGSN address against the MT Correlation ID may be omitted if a parameter within the send routing info for short message MAP SRI-SM, 700, 701, 600, 601 explicitly indicates that delivery of a short message is not intended.

If a parameter within the "sendRoutingInfoForShortMsg" MAP SRI-SM, 700, 701, 600, 601 explicitly indicates that delivery of a short message is not intended and that only IMSI or only MCC and MNC are requested, the IMSI IE (IMSI information element) may be populated with IMSI or with MCC and MNC and dummy MSIN and the MSC address and/or the SGSN address with a dummy network node address.

Furthermore, in order to avoid unnecessary waste of resources when an SMS-Router 303 is deployed the operation SRI_for_SM may be invoked with a parameter indicating that delivery of a short message is not intended and only MCC and MNC are requested.

Besides this an additional parameter, which is called SMS-Router indication is inserted within the MAP SRI-SM service primitive or MAP-send-routing-info-for-SM service primitive. The parameter SM Router Indication indicates if this parameter is present, that delivery of a short message is not intended. The presence of the SMS-Router indication parameter further indicates that only IMSI or only MCC and MNC are requested.

If the SMS Router Indicator was present in the indication with a value of "only MCC and MNC requested" then the IMSI parameter of a service primitive for MAP-send-routing-info-for-SM contains MCC and MNC and dummy MSIN.
If the SMS Router Indicator, i.e. the indication, was present in the indication a dummy address may be provided as network node number. Network node number is a further parameter of the MAP-send-routing-info-for-SM service primitive.

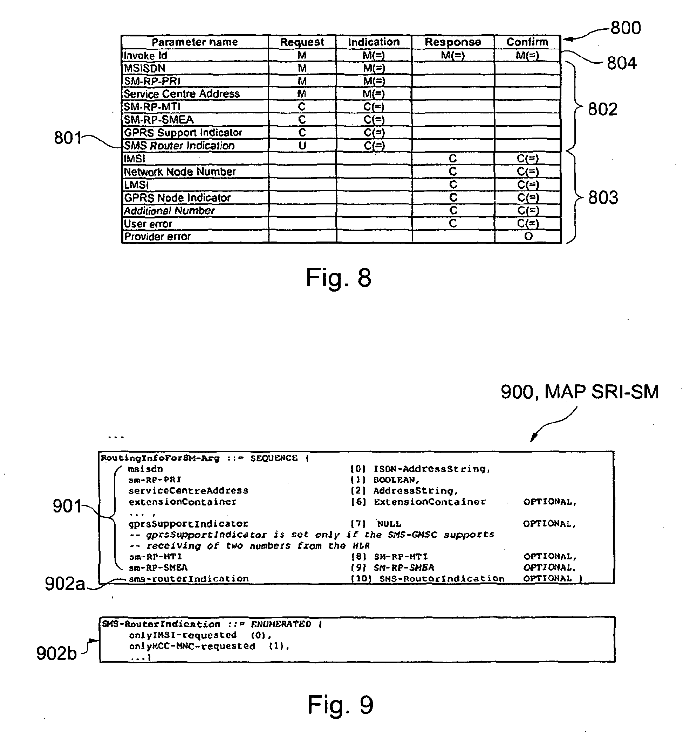

Fig. 8 shows a list of parameters for a MAP SRI-SM service primitive according to an exemplary embodiment of the present invention.

Fig. 8 shows a plurality of parameters 800 for the service primitive MAP-send-routing-info-for-SM. Within the plurality of parameters the parameter SMS Router Indication 801 has been added to the list of service primitive parameters 800 in order to enable a node 301b to indicate whether an IMSI or MCC and MNC information is requested.

The parameters 802 including the SMS Router Indication parameter 801 in the direction to a lower layer is used as a request and an indication parameter.

The group of parameters 803 are response/confirm parameters which can be retrieved or delivered from a lower layer to an upper layer.

The parameter Invoke Id 804 can be a response, confirm, indication or request parameter.

Fig. 9 shows an identifier request message frame 900, MAP SRI-SM according to an exemplary embodiment of the present invention.

Fig. 9 shows a message format for the MAP SRI-SM message 600, 601, 700, 701, 900. The MAP SRI-SM message 900 comprises a plurality of parameters 901 in order to retrieve a routing information for a short message. For example, one of the parameters is the MSISDN parameter containing the MSISDN number of the destination MS.
The RoutingInfoForSM-Arg message 900 as of Fig. 9 is described in abstract syntax notation one (ASN.1). As can be seen from Fig. 9 the sms-routerIndication 902a is introduced in the MAP SRI-SM message 900, 600, 601, 700, 701. The SMS-Router indication parameter or sms-routerIndication 902a is further described in the block 902b. The SMS-Router indication parameter 902b has a value of 0, if only IMSI is requested and the SMS-Router indication parameter 902b has a value of 1 if only MCC and MNC information is requested.

The description as depicted in Fig. 9 may be realized as an electro-magnetic signal or a burst of signal.

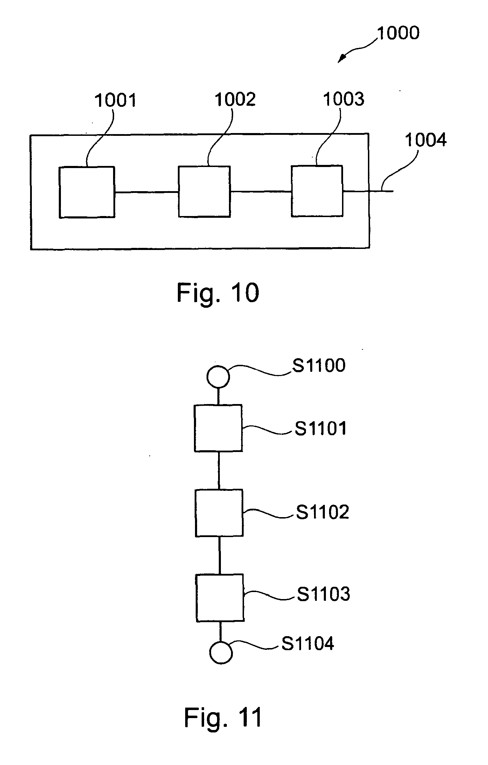

Fig. 10 shows an apparatus for requesting a mobile user identifier according to an exemplary embodiment of the present invention.

In Fig. 10 the apparatus 1000 for requesting a mobile user identifier e.g. MCC, MNC, IMSI is shown. The apparatus for requesting a mobile user identifier 1000 or the sender 1000, the SMS-GMSC 1000, the multimedia service relay server 1000 or the mobile number portability server 1000 comprises the indication setting device 1001. The indication setting device 1001 is adapted for setting an indication 902a, 902b, indication field 902a, 902b or sms-routerIndication 902a, 902b.

The indication setting device 1001 may determine if only IMSI is requested or only MCC and MNC is requested. The indication setting device 1001 is adapted for populating the SMS-Router indication parameter 902a, 902b with either a value of 0 or a value of 1.

The apparatus 1000 further comprises the identifier request message configuring device 1002, wherein the identifier request message configuring device 1002 is adapted for configuring an identifier request message 900, MAP SRI-SM for providing a mobile user identifier e.g. MCC, MNC, IMSI.

In other words, the identifier request message configuring device 1002 populates the parameters 901 e.g. the MSISDN of the routing info for SMS message 900, MAP SRI-SM. The identifier request message configuring device 1002 further populates or sets the parameter sms-routerIndication 902a, 902b.

After the identifier request message configuring device 1002 has configured or composed an identifier request message 900, MAP SRI-SM, the identifier request message configuring device 1002 sends the composed message to the request message transceiving device 1003. The identifier request message transceiving device 1003 is adapted for sending the identifier request message 900, MAP SRI-SM, via the interface 1004 to an HLR 302.

The message transmitting device 1003 also is adapted to receive the requested information, such as mobile user identifier.

Fig. 11 shows a method for providing a mobile user identifier according to an exemplary embodiment of the present invention.

The method shown in Fig. 11 starts in the start point S1100. In step S1101 an identifier request message 900, MAP SRI-SM is received.

In step S1102 the received identifier request message is investigated in order to determine whether an indication 902a, 902b or an SMS-Router indication 902a, 902b is available within the received identifier request message 900, MAP SRI-SM 601, 701 and which value the indication 902a, 902b has. In step S1103 a mobile user identifier MCC, MNC, IMSI is retrieved and the mobile user identifier MCC, MNC, IMSI is sent to the sender. In step S1104 the method has reached an end state.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

## Claims

1. Apparatus (100) for providing a mobile user identifier (MCC, MNC, IMSI), the apparatus comprising:
an identifier request message receiving device (101);
an indication detecting device (102);
an identifier retrieving device (103);
wherein the indication detecting device (102) is connected to the identifier request message receiving device (101) and to the identifier retrieving device (103);
wherein the identifier request message receiving device (101) is adapted for receiving an identifier request message (MAP SRI-SM, 900) for providing a mobile user identifier (MCC, MNC, IMSI);
wherein the indication detecting device (102) is adapted for detecting an indication (902a, 902b) within the identifier request message (MAP SRI-SM, 900), the indication indicating whether the mobile user identifier (MCC, MNC, IMSI) only is requested;
wherein
the identifier request message (MAP SRI-SM, 900) is a mobile application part send routing info for short message message;
wherein the identifier retrieving device (103) is adapted for retrieving the mobile user identifier (MCC, MNC, IMSI) dependent on the detected indication (902) in that if the indication detecting device (102) detects the absence of an indication indicating that only mobile country code (MCC) and mobile network code (MNC) are requested, the identifier retrieving device (103) retrieves a mobile user identifier (IMSI) by sending a retrieve message (307, 501, 703) and
if the indication detecting device (102) detects the presence of an indication indicating that only mobile country code (MCC) and mobile network code (MNC) are requested and that delivery of a short message is not intended, no retrieve message is sent.

2. The apparatus (100) of claim 1, wherein the identifier retrieving device (103) is further adapted for providing an acknowledge message (MAP SRI-SM ack, 602, 705) containing the retrieved mobile user identifier (MCC, MNC, IMSI).

3. The apparatus (100) of claim 1 or 2, wherein the identifier retrieving device (103) is further adapted retrieving the mobile user identifier (MCC, MNC, IMSI) from an internal database if only mobile country code (MCC) and mobile network code (MNC) only is requested.

4. The apparatus (100) of claim 1 or 2, wherein the identifier retrieving device (103) is further adapted for retrieving the mobile user identifier(MCC, MNC, IMSI) by requesting an home location register (HLR, 302) if the mobile user identifier (MCC, MNC, IMSI) international mobile subscriber identifier (IMSI) only is requested.

5. The apparatus (100) of claims 1 to 4, wherein the identication detection device (103) is further adapted for detecting an indication that no short message is intended to be sent

6. The apparatus (100) of one of claims 1 to 5, wherein the apparatus (100) is at least one selected from the group of apparatus consisting of a short-message-service-router (SMS-router) and an internet-protocol-short-message-gateway (IP-SM-GW).

7. The apparatus (100) of one of claims 1 to 6, wherein the mobile user identifier (MCC, MNC, IMSI) is at least one selected from the group of mobile user identifiers (MCC, MNC, IMSI) consisting of a mobile country code (MCC), a mobile network code (MNC) and an international mobile subscriber identifier (IMSI).

8. The apparatus (100) of one of claims 2 to 7, wherein identifier retrieving device (103) is further adapted for populating the acknowledge message (MAP SRI-SM ack, 602, 705) with a dummy address.

9. The apparatus (100) of claim 7, wherein the identifier retrieving device (103) is further adapted for populating the acknowledge message (MAP SRI-SM ack, 602, 705) with a dummy INTERNATIONAL MOBILE SUBSCRIBER IDENTIFIER (IMSI) and/or a dummy network node address.

10. Method for providing a mobile user identifier (MCC, MNC, IMSI), the method comprising:
receiving an identifier request message (MAP SRI-SM, 900) for providing a mobile user identifier (MCC, MNC, IMSI),the identifier request message (MAP SRI-SM, 900) being a mobile application part send routing info for short message (MAP SRI-SM) message;
wherein the method also comprises
detecting an indication (902a, 902b) within the identifier request message (MAP SRI-SM, 900), the indication indicating whether the mobile user identifier (MCC, MNC, IMSI) only is requested;
retrieving the mobile user identifier (IMSI) dependent on the detected indication (902a, 902b)
by sending a retrieve message (307, 501, 703) if the detecting step shows the absence of an indication indicating that only mobile country code (MCC) and mobile network code (MNC) are requested, and omitting the sending of a retrieve message (307, 501, 703), if the detecting step shows the presence of an indication indicating that only mobile country code (MCC) and mobile network code (MNC) are requested and that delivery of a short message is not intended.

11. The method of claim 10, further comprising:
providing an acknowledge message (MAP SRI-SM ack, 602, 705) containing the retrieved mobile user identifier (MCC, MNC, IMSI).

12. The method of claim 10 or 11, further comprising:
retrieving the mobile user identifier (MCC, MNC, IMSI) from an internal database if only mobile country code (MCC) and mobile network code (MNC) is requested.

13. The method of claim 10 or 11, further comprising:
retrieving the mobile user identifier(MCC, MNC, IMSI) by requesting an home location register (HLR, 302) if the mobile user identifier (MCC, MNC, IMSI) international mobile subscriber identifier (IMSI) only is requested.

14. The method of claim 10 or 11, further comprising:
detecting an indication that no short message is intended to be sent.

15. The method of one of claims 11 to 14, further comprising:
populating the acknowledge message (MAP SRI-SM ack, 602, 705) with a dummy address.

16. The method of one of claim 13, further comprising:
populating the acknowledge message (MAP SRI-SM ack, 602, 705) with a dummy INTERNATIONAL MOBILE SUBSCRIBER IDENTIFIER (IMSI) and/or a dummy network node address.

17. A computer-readable medium, in which a computer program for providing a mobile user identifier (MCC, MNC, IMSI)is stored, which computer program, when being executed by a processor, is adapted to carry out the method of one of claims 10 to 16.

18. A program element for providing a mobile user identifier (MCC, MNC, IMSI), which, when being executed by a processor, is adapted to carry out the method of one of claims 10 to 16.

## Patentansprüche

1. Vorrichtung (100) zum Bereitstellen einer Mobilnutzerkennung (MCC, MNC, IMSI), wobei die Vorrichtung Folgendes umfasst:
eine Kennungsanforderungsnachricht-Empfangseinrichtung (101);
eine Angabendetektionseinrichtung (102);
eine Kennungsabrufeinrichtung (103);
wobei die Angabendetektionseinrichtung (102) mit der Kennungsanforderungsnachricht-Empfangseinrichtung (101) und der Kennungsabrufeinrichtung (103) verbunden ist;
wobei die Kennungsanforderungsnachricht-Empfangseinrichtung (101) zum Empfangen einer Kennungsanforderungsnachricht (MAP SRI-SM, 900) zum Bereitstellen einer Mobilnutzerkennung (MCC, MNC, IMSI) ausgelegt ist;
wobei die Angabendetektionseinrichtung (102) zum Detektieren einer Angabe (902a, 902b) in der Kennungsanforderungsnachricht (MAP SRI-SM, 900) ausgelegt ist, wobei die Angabe angibt, ob nur die Mobilnutzerkennung (MCC, MNC, IMSI) angefordert wird;
wobei
die Kennungsanforderungsnachricht (MAP SRI-SM, 900) eine Mobilanwendungsteil-sendelenkungsinformations-Nachricht für Kurznachricht ist;
wobei die Kennungsabrufeinrichtung (103) zum Abrufen der Mobilnutzerkennung (MCC, MNC, IMSI) ausgelegt ist abhängig von der detektierten Angabe (902) darin, dass dann, wenn die Angabendetektionseinrichtung (102) das Fehlen einer Angabe, die angibt, dass nur die mobile Landeskennzahl (MCC) und die mobile Netzkennzahl (MNC) angefordert werden, detektiert, die Kennungsabrufeinrichtung (103) eine Mobilnutzerkennung (IMSI) durch Senden einer Abrufnachricht (307, 501, 703) abruft, und dann,
wenn die Angabendetektionseinrichtung (102) das Vorhandensein einer Angabe detektiert, die angibt, dass nur die mobile Landeskennzahl (MCC) und die mobile Netzkennzahl (MNC) angefordert sind und dass die Zustellung einer Kurznachricht nicht vorgesehen ist, keine Abrufnachricht gesendet wird.

2. Vorrichtung (100) nach Anspruch 1, wobei die Kennungsabrufeinrichtung (103) ferner zum Bereitstellen einer Quittung (MAP SRI-SM ack, 602, 705), die die abgerufene Mobilnutzerkennung (MCC, MNC, IMSI) enthält, ausgelegt ist.

3. Vorrichtung (100) nach Anspruch 1 oder 2, wobei die Kennungsabrufeinrichtung (103) ferner zum Abrufen der Mobilnutzerkennung (MCC, MNC, IMSI) von einer internen Datenbasis ausgelegt ist, wenn nur die mobile Landeskennzahl (MCC) und die mobile Netzkennzahl (MNC) angefordert sind.

4. Vorrichtung (100) nach Anspruch 1 oder 2, wobei die Kennungsabrufeinrichtung (103) ferner zum Abrufen der Mobilnutzerkennung (MCC, MNC, IMSI) durch Abfragen eines Heimatregisters (HLR, 302) ausgelegt ist, wenn nur die internationale Mobilteilnehmerkennung (IMSI) der Mobilnutzerkennung (MCC, MNC, IMSI) angefordert ist.

5. Vorrichtung (100) nach den Ansprüchen 1 bis 4, wobei die Identifikationsdetektionseinrichtung (103) ferner zum Detektieren einer Angabe, dass nicht vorgesehen ist, dass eine Kurznachricht gesendet wird, ausgelegt ist.

6. Verfahren (100) nach einem der Ansprüche 1 bis 5, wobei die Vorrichtung (100) wenigstens eine Vorrichtung ist, die aus der Gruppe von Vorrichtungen ausgewählt ist, die aus einem Kurznachrichtendienst-Router (SMS-Router) und einem Internetprotokollkurznachrichten-Gateway (IP-SM-GW) besteht.

7. Vorrichtung (100) nach einem der Ansprüche 1 bis 6, wobei die Mobilnutzerkennung (MCC, MNC, IMSI) wenigstens eine Kennung ist, die aus der Gruppe von Mobilnutzerkennungen (MCC, MNC, IMSI) ausgewählt ist, die aus einer mobilen Landeskennzahl (MCC), einer mobilen Netzkennzahl (MNC) und einer internationalen Mobilteilnehmerkennung (IMSI) ausgewählt ist.

8. Vorrichtung (100) nach einem der Ansprüche 2 bis 7, wobei die Kennungsabrufeinrichtung (103) ferner zum Bestücken der Quittung (MAP SRI-SM ack, 602, 705) mit einer Scheinadresse ausgelegt ist.

9. Vorrichtung (100) nach Anspruch 7, wobei die Kennungsabrufeinrichtung (103) ferner zum Bestücken der Quittung (MAP SRI-SM ack, 602, 705) mit einer INTERNATIONALEN SCHEIN-MOBILTEILNEHMERKENNUNG (IMSI) und/oder einer Schein-Netzknotenadresse ausgelegt ist.

10. Verfahren zum Bereitstellen einer Mobilnutzerkennung (MCC, MNC, IMSI), wobei das Verfahren Folgendes umfasst:
Empfangen einer Kennungsanforderungsnachricht (MAP SRI-SM, 900) zum Bereitstellen einer Mobilnutzerkennung (MCC, MNC, IMSI), wobei die Kennungsanforderungsnachricht (MAP SRI-SM, 900) eine Mobilanwendungsteil-sendelenkungsinformations-Nachricht für Kurznachricht (MAP SRI-SM-Nachricht) ist;
wobei das Verfahren auch Folgendes umfasst:
Detektieren einer Angabe (902a, 902b) innerhalb der Kennungsanforderungsnachricht (MAP SRI-SM, 900), wobei die Angabe angibt, ob nur die Mobilnutzerkennung (MCC, MNC, IMSI) angefordert ist;
Abrufen der Mobilnutzerkennung (IMSI) abhängig von der detektierten Angabe (902a, 902b)
durch Senden einer Abrufnachricht (307, 501, 703), wenn der Schritt des Detektierens das Fehlen einer Angabe, die angibt, dass nur die mobile Landeskennzahl (MCC) und die mobile Netzkennzahl (MNC) angefordert werden, zeigt, und Weglassen des Sendens einer Abrufnachricht (307, 501, 703), wenn der Schritt des Detektierens das Vorhandensein einer Angabe, die angibt, dass nur die mobile Landeskennzahl (MCC) und die mobile Netzkennzahl (MNC) angefordert sind und dass die Zustellung einer Kurznachricht nicht vorgesehen ist, zeigt.

11. Verfahren nach Anspruch 10, das ferner Folgendes umfasst:
Bereitstellen einer Quittungsnachricht (MAP SRI-SM ack, 602, 705), die die abgerufene Mobilnutzerkennung (MCC, MNC, IMSI) enthält.

12. Verfahren nach Anspruch 10 oder 11, das ferner Folgendes umfasst:
Abrufen der Mobilnutzerkennung (MCC, MNC, IMSI) von einer internen Datenbasis, wenn nur die mobile Landeskennzahl (MCC) und die mobile Netzkennzahl (MNC) angefordert sind.

13. Verfahren nach Anspruch 10 oder 11, das ferner Folgendes umfasst:
Abrufen der Mobilnutzerkennung (MCC, MNC, IMSI) durch Abfragen eines Heimatregisters (HLR, 302), wenn nur die internationale Mobilteilnehmerkennung (IMSI) der Mobilnutzerkennung (MCC, MNC, IMSI) angefordert ist.

14. Verfahren nach Anspruch 10 oder 11, das ferner Folgendes umfasst:
Detektieren einer Angabe, dass nicht vorgesehen ist, dass eine Kurnachricht gesendet wird.

15. Verfahren nach einem der Ansprüche 11 bis 14, das ferner Folgendes umfasst:
Bestücken der Quittungsnachricht (MAP SRI-SM ack, 602, 705) mit einer Scheinadresse.

16. Verfahren nach Anspruch 13, das ferner Folgendes umfasst:
Bestücken der Quittungsnachricht (MAP SRI-SM ack, 602, 705) mit einer INTERNATIONALEN SCHEIN-MOBILTEILNEHMERKENNUNG (IMSI) und/oder einer Schein-Netzknotenadresse.

17. Computerlesbares Medium, in dem ein Computerprogramm zum Bereitstellen einer Mobilnutzerkennung (MCC, MNC, IMSI) gespeichert ist, wobei das Computerprogramm, wenn es von einem Prozessor ausgeführt wird, ausgelegt ist, das Verfahren nach einem der Ansprüche 10 bis 16 auszuführen.

18. Programmelement zum Bereitstellen einer Mobilnutzerkennung (MCC, MNC, IMSI), das dann, wenn es von einem Prozessor ausgeführt wird, ausgelegt ist, das Verfahren nach einem der Ansprüche 10 bis 16 auszuführen.

## Revendications

1. Un appareil (100) destiné à la fourniture d'un identifiant d'utilisateur mobile (MCC, MNC, IMSI), l'appareil comprenant :
un dispositif de réception de message de demande d'identifiant (101),
un dispositif de détection d'indication (102),
un dispositif de récupération d'identifiant (103),
dans lequel le dispositif de détection d'indication (102) est raccordé au dispositif de réception de message de demande d'identifiant (101) et au dispositif de récupération d'identifiant (103),
dans lequel le dispositif de réception de message de demande d'identifiant (101) est adapté de façon à recevoir un message de demande d'identifiant (MAP SRI-SM, 900) destiné à la fourniture d'un identifiant d'utilisateur mobile (MCC, MNC, IMSI),
dans lequel le dispositif de détection d'indication (102) est adapté de façon à détecter une indication (902a, 902b) à l'intérieur du message de demande d'identifiant (MAP SRI-SM, 900), l'indication indiquant si l'identifiant d'utilisateur mobile (MCC, MNC, IMSI) uniquement est demandé,
dans lequel
le message de demande d'identifiant (MAP SRI-SM, 900) est un message partie d'application mobile envoi d'informations d'acheminement pour message court,
dans lequel le dispositif de récupération d'identifiant (103) est adapté de façon à récupérer l'identifiant d'utilisateur mobile (MCC, MNC, IMSI) en fonction de l'indication détectée (902), dans lequel, si le dispositif de détection d'indication (102) détecte l'absence d'une indication indiquant qu'uniquement un code de pays mobile (MCC) et un code de réseau mobile (MNC) sont demandés, le dispositif de récupération d'identifiant (103) récupère un identifiant d'utilisateur mobile (IMSI) par l'envoi d'un message de récupération (307, 501, 703), et
si le dispositif de détection d'indication (102) détecte la présence d'une indication indiquant qu'uniquement un code de pays mobile (MCC) et un code de réseau mobile (MNC) sont demandés et que la remise d'un message court n'est pas prévue, aucun message de récupération n'est envoyé.

2. L'appareil (100) selon la revendication 1, dans lequel le dispositif de récupération d'identifiant (103) est adapté en outre de façon à fournir un message d'accusé de réception (MAP SRI-SM ack, 602, 705) contenant l'identifiant d'utilisateur mobile récupéré (MCC, MNC, IMSI).

3. L'appareil (100) selon la revendication 1 ou 2, dans lequel le dispositif de récupération d'identifiant (103) est adapté en outre de façon à récupérer l'identifiant d'utilisateur mobile (MCC, MNC, IMSI) à partir d'une base de données interne si uniquement un code de pays mobile (MCC) et uniquement un code de réseau mobile (MNC) sont demandés.

4. L'appareil (100) selon la revendication 1 ou 2, dans lequel le dispositif de récupération d'identifiant (103) est adapté en outre de façon à récupérer l'identifiant d'utilisateur mobile(MCC, MNC, IMSI) par la demande d'un registre de position de rattachement (HLR, 302) si l'identifiant d'utilisateur mobile (MCC, MNC, IMSI), identifiant d'abonné mobile international (IMSI) uniquement est demandé.

5. L'appareil (100) selon les revendications 1 à 4, dans lequel le dispositif de détection d'identifiant (103) est adapté en outre de façon à détecter une indication qu'aucun message court n'est prévu d'être envoyé.

6. L'appareil (100) selon l'une quelconque des revendications 1 à 5, dans lequel l'appareil (100) est au moins un appareil sélectionné dans le groupe d'appareils se composant d'un routeur de service de messages courts (SMS router) et d'une passerelle de messages courts à protocole Internet (IP-SM-GW).

7. L'appareil (100) selon l'une quelconque des revendications 1 à 6, dans lequel l'identifiant d'utilisateur mobile (MCC, MNC, IMSI) est au moins un identifiant sélectionné dans le groupe d'identifiants d'utilisateurs mobiles (MCC, MNC, IMSI) se composant d'un code de pays mobile (MCC), d'un code de réseau mobile (MNC) et d'un identifiant d'abonné mobile international (IMSI).

8. L'appareil (100) selon l'une quelconque des revendications 2 à 7, dans lequel le dispositif de récupération d'identifiant (103) est adapté en outre de façon à remplir le message d'accusé de réception (MAP SRI-SM ack, 602, 705) avec une adresse factice.

9. L'appareil (100) selon la revendication 7, dans lequel le dispositif de récupération d'identifiant (103) est adapté en outre de façon à remplir le message d'accusé de réception (MAP SRI-SM ack, 602, 705) avec un IDENTIFIANT D'ABONNÉ MOBILE INTERNATIONAL (IMSI) factice et/ou une adresse de noeud de réseau factice.

10. Un procédé destiné à la fourniture d'un identifiant d'utilisateur mobile (MCC, MNC, IMSI), le procédé comprenant :
la réception d'un message de demande d'identifiant (MAP SRI-SM, 900) destiné à la fourniture d'un identifiant d'utilisateur mobile (MCC, MNC, IMSI), le message de demande d'identifiant (MAP SRI-SM, 900) étant un message partie d'application mobile envoi d'informations d'acheminement pour message court (MAP SRI-SM),
dans lequel le procédé comprend également
la détection d'une indication (902a, 902b) à l'intérieur du message de demande d'identifiant (MAP SRI-SM, 900), l'indication indiquant si l'identifiant d'utilisateur mobile (MCC, MNC, IMSI) uniquement est demandé,
la récupération de l'identifiant d'utilisateur mobile (IMSI) en fonction de l'indication détectée (902a, 902b)
par l'envoi d'un message de récupération (307, 501, 703) si l'étape de détection signale l'absence d'une indication indiquant qu'uniquement un code de pays mobile (MCC) et un code de réseau mobile (MNC) sont demandés, et l'omission de l'envoi d'un message de récupération (307, 501, 703) si l'étape de détection signale la présence d'une indication indiquant qu'uniquement un code de pays mobile (MCC) et un code de réseau mobile (MNC) sont demandés et que la remise d'un message court n'est pas prévue.

11. Le procédé selon la revendication 10, comprenant en outre :
la fourniture d'un message d'accusé de réception (MAP SRI-SM ack, 602, 705) contenant l'identifiant d'utilisateur mobile récupéré (MCC, MNC, IMSI).

12. Le procédé selon la revendication 10 ou 11, comprenant en outre :
la récupération de l'identifiant d'utilisateur mobile (MCC, MNC, IMSI) à partir d'une base de données interne si uniquement un code de pays mobile (MCC) et un code de réseau mobile (MNC) sont demandés.

13. Le procédé selon la revendication 10 ou 11, comprenant en outre :
la récupération de l'identifiant d'utilisateur mobile (MCC, MNC, IMSI) par la demande d'un registre de position de rattachement (HLR, 302) si l'identifiant d'utilisateur mobile (MCC, MNC, IMSI) identifiant d'abonné mobile international (IMSI) uniquement est demandé.

14. Le procédé selon la revendication 10 ou 11, comprenant en outre :
la détection d'une indication qu'aucun message court n'est prévu d'être envoyé.

15. Le procédé selon l'une quelconque des revendications 11 à 14, comprenant en outre :
le remplissage du message d'accusé de réception (MAP SRI-SM ack, 602, 705) avec une adresse factice.

16. Le procédé selon la revendication 13, comprenant en outre :
le remplissage du message d'accusé de réception (MAP SRI-SM ack, 602, 705) avec un IDENTIFIANT D'ABONNÉ MOBILE INTERNATIONAL (IMSI) factice et/ou une adresse de noeud de réseau factice.

17. Un support lisible par ordinateur, dans lequel un programme informatique destiné à la fourniture d'un identifiant d'utilisateur mobile (MCC, MNC, IMSI) est conservé en mémoire, ledit programme informatique, lorsqu'il est exécuté par un processeur, étant adapté de façon à exécuter le procédé selon l'une quelconque des revendications 10 à 16.

18. Un élément de programme destiné à la fourniture d'un identifiant d'utilisateur mobile (MCC, MNC, IMSI), qui, lorsqu'il est exécuté par un processeur, est adapté de façon à exécuter le procédé selon l'une quelconque des revendications 10 à 16.
